# EUROPEAN PATENT SPECIFICATION

(11) **EP 4 031 633 B1**
(45) Date of publication and mention of the grant of the patent: **24.12.2025**
(21) Application number: 20785626.1
(22) Date of filing: 15.09.2020
(51) Int. Cl.: C09J 7/38

(54) **PRESSURE SENSITIVE ADHESIVE ARTICLE**
HAFTKLEBEARTIKEL
ARTICLE ADHÉSIF SENSIBLE À LA PRESSION

(30) Priority: 16.09.2019 US 201962900710 P
(43) Date of publication of application: 27.07.2022
(73) Proprietor: Dow Global Technologies LLC, Midland, MI 48674 (US); Rohm and Haas Company, Collegeville, PA 19426 (US)
(72) Inventor: PUJARI, Saswati, Collegeville, Pennsylvania 19426 (US); BINDER, Joseph B., Collegeville, Pennsylvania 19426 (US); PACHOLSKI, Michaeleen L., Collegeville, Pennsylvania 19426 (US); KEELY, David R., Louisville, Kentucky 40216 (US)
(74) Representative: Boult Wade Tennant LLP
(86) International application number: PCT/US2020/050842
(87) International publication number: WO 2021/055336

(56) References cited:
- EP-A1- 2 803 712
- EP-A1- 2 941 463
- EP-A1- 3 240 847
- EP-A2- 2 941 462
- US-A1- 2013 202 886

## Description

Pressure sensitive adhesives (PSAs) that contain acrylic polymers have many desirable characteristics. For example, they generally have better resistance to chemical reagents and to UV light than PSAs made from many other materials. It is often desired to provide an acrylic PSA that bonds well to polyolefin target substrates. In the past, sometimes a tackifier compound was added to the PSA to increase the tack adhesion (also called "tackiness" or "tack") of the PSA to a target substrate. However, addition of tackifier normally causes an undesirable reduction in the shear resistance of the PSA.

US 9,765,241 describes a pressure sensitive adhesive article comprising substrate, a layer containing an acrylic polymer, and a layer containing an acrylic polymer that comprises polymerized units of one or more high-aliphatic vinyl monomer.

EP-A-2,941,462 relates to a pressure sensitive adhesive article comprising (a) a substrate (Sa), (b) in contact with said substrate (Sa), a layer (Lb) of a composition (Cb) that comprises one or more acrylic polymer (POLb) having Tg of -10 °C or lower, and (c) in contact with said layer (Lb), a layer (Lc) of a composition (Cc) that comprises one or more acrylic polymer (POLc) that comprises 20 % to 90 % polymerized units of one or more high-aliphatic vinyl monomer, by weight based on the weight of said polymer (POLc).

US-A-2013/202886 relates to an aqueous polymer dispersion suitable for application as tackifiers comprising at least one polymer dispersed in water and having a weight-average molecular weight of less than 50,000 and a glass transition temperature of greater than or equal to -40 °C to less than or equal to 0 °C preparable by emulsion polymerization in the presence of at least one chain transfer agent and preparable from a monomer mixture comprising (a) at least 40% by weight of at least one C1 to C20 alkyl(meth)acrylate, (b) 0% to 30% by weight of at least one vinylaromatic, (c) at least 0.1% by weight of at least one acid monomer, (d) 0% to 50% by weight of further monomers, the figures for the monomer amounts being based in each case on the sum of all the monomers.

EP-A-2,803,712 relates to a multilayer pressure sensitive adhesive assembly comprising at least a first pressure sensitive adhesive layer superimposed to a second polymer layer, wherein a curable liquid precursor of the first pressure sensitive adhesive polymer layer comprises a low Tg (meth)acrylate copolymer and a high Tg (meth)acrylate copolymer having a weight average molecular weight (Mw) of above 20,000 Daltons.

It is desired to provide a PSA that contains acrylic polymer and that, when bonded to polyolefin target substrates, shows both good tack adhesion and good shear resistance. Additionally, it is desired to provide a PSA that comprises layers, with the top layer (i.e., the layer adjacent to the target substrate) containing a relatively high level of tackifier and the other layer(s) containing relatively low level of tackifier. It is currently contemplated that, in such a multi-layer PSA, if the tackifier were to migrate out of the top layer and into the other layer(s), the tack adhesion to the target substrate would be reduced. Thus it is also desired to provide a multi-layer PSA that resists the migration of tackifier from the top layer.

The following is a statement of the invention.

A first aspect of the present invention is a pressure sensitive adhesive article comprising
(a) a substrate (Sa)
(b) in contact with the substrate (Sa), a layer (Lb) of a pressure sensitive composition (Cb) that comprises one or more acrylic polymer (POLb) having Tg of 20°C or lower, and
(c) in contact with the layer (Lb), a layer (Lc) of a composition (Cc) that comprises, by weight based on the weight of the layer (Lc),
   (i) 60% to 99.5% one or more acrylic polymer (POLc1) having Tg of 20°C or lower, and
   (ii) 0.5% to 40% one or more acrylic polymer (POLc2) having number-average molecular weight of 2,000 or higher, having number-average molecular weight of 35,000 or less, having Tg of -10°C or higher, and comprising polymerized units, by weight based on the weight of (POLc2),
      (A) 50% to 99.9% of one or more unsubstituted alkyl ester of (meth)acrylic acid, wherein the alkyl group has 1 to 20 carbon atoms,
      (B) 0% to 50% of acrylic acid, methacrylic acid, or a mixture thereof,
      (C) and 0% to 50% one or more additional vinyl monomer,
   wherein composition (Cc) comprises 1% or less by weight based on the dry weight of composition (Cc) of a tackifier that is not an acrylic polymer.

A second aspect of the present invention is a method of making the pressure sensitive article of the first aspect, wherein the method comprises,
(A) forming a layer of an aqueous composition (Qb) that contains dispersed particles of the acrylic polymer (POLb) on a first surface,
(B) forming a layer of an aqueous composition (Qc) that contains dispersed particles that contain (i) the acrylic polymer (POLc1) and (ii) the acrylic polymer (POLc2) on a second surface,
(C) drying the layer of the aqueous composition (Qb) to form the layer (Lb), and
(D) drying the layer of the aqueous composition (Qc) to form the layer (Lc).

A third aspect of the present invention is a bonded article made by a process of contacting a substrate (Sd) with the article of the first aspect, wherein the substrate (Sd) is in contact with the layer (Lc).

The following is a brief description of the drawings.

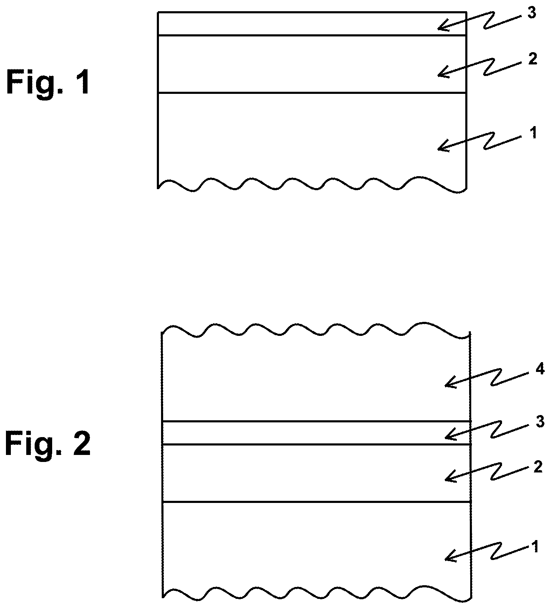

FIG. 1 is a vertical cross section of a pressure sensitive adhesive article of the present invention showing substrate (Sa) (1); layer (Lb) (2) of a composition (Cb), which contains one or more acrylic polymer (POLb); and layer (Lc) (3) of a composition (Cc), which contains polymer (POLc1) and polymer (POLc2). FIG. 1 is not drawn to scale in any sense. For example, the size of the pressure sensitive adhesive article of the present invention in the horizontal direction shown in FIG. 1 may be larger by a factor of 1,000 or more than the size in the vertical direction shown in FIG. 1.

FIG. 2 (also not drawn to scale) depicts a preferred use to which the pressure sensitive adhesive article of the present invention may be put. FIG. 2 shows layer (Lc) (3) in contact with an additional substrate (Sd) (4).

The following is a detailed description of the invention.

As used herein, the following terms have the designated definitions, unless the context clearly indicates otherwise.

As used herein, Dynamic Mechanical Analysis (DMA) refers to measurements made in shear geometry in the linear viscoelastic range at frequency of 1 sec⁻¹. DMA measures the elastic modulus (G'), the loss modulus (G"), and tandelta. Elastic modulus is reported herein in units of kilopascals (kPa).

The glass transition temperature (Tg) of a material is determined by differential scanning calorimetry using the midpoint method and temperature scan rate of 10°C per minute according to test method ASTM D7426-08 (American Society of Testing and Materials, Conshohocken, Pa., USA).

A "polymer," as used herein is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof. The size of polymers is characterized by Mn, the number-average molecular weight, or by Mw, the weight-average molecular weight, both of which are measured by size exclusion chromatography.

As used herein "weight of polymer" means the dry weight of polymer.

Molecules that can react with each other to form the repeat units of a polymer are known herein as "monomers." The repeat units so formed are known herein as "polymerized units" of the monomer.

Vinyl monomers have the structure 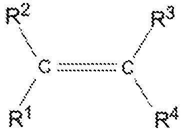 where each of R¹, R², R³, and R⁴ is, independently, a hydrogen, a halogen, an aliphatic group (such as, for example, an alkyl group), a substituted aliphatic group, an aryl group, a substituted aryl group, another substituted or unsubstituted organic group, or any combination thereof.

Alkyl groups may be linear, branched, cyclic, or any combination thereof.

Some suitable vinyl monomers include, for example, styrene, substituted styrenes, dienes, ethylene, other alkenes, dienes, ethylene derivatives, and mixtures thereof. Ethylene derivatives include, for example, unsubstituted or substituted versions of the following: ethenyl esters of substituted or unsubstituted alkanoic acids (including, for example, vinyl acetate and vinyl neodecanoate), acrylonitrile, (meth)acrylic acid, (meth)acrylates, (meth)acrylamides, vinyl chloride, halogenated alkenes, and mixtures thereof. As used herein, "(meth)acrylic" means acrylic or methacrylic; "(meth)acrylate" means acrylate or methacrylate; and "(meth)acrylamide" means acrylamide or methacrylamide. "Substituted" means having at least one attached chemical group such as, for example, alkyl group, alkenyl group, vinyl group, hydroxyl group, carboxylic acid group, other functional groups, and combinations thereof. In some embodiments, substituted monomers include, for example, monomers with more than one carbon-carbon double bond, monomers with hydroxyl groups, monomers with other functional groups, and monomers with combinations of functional groups. (Meth)acrylates are substituted and unsubstituted esters or amides of (meth)acrylic acid.

As used herein, acrylic monomers are monomers selected from (meth)acrylic acid, aliphatic esters of (meth)acrylic acid, aliphatic esters of (meth)acrylic acid having one or more substituent on the aliphatic group, (meth)acrylamide, N-substituted (meth)acrylamide, and mixtures thereof.

As used herein, vinylaromatic monomers are monomers selected from styrene, alpha-alkyl styrenes, other substituted styrenes, and mixtures thereof.

As used herein, an "acrylic" polymer is a polymer in which 50% or more of the polymerized units are acrylic monomers, and also in which 70% or more of the polymerized units are either acrylic monomers or vinylaromatic monomers. The percentages are by weight based on the weight of the polymer.

As used herein, a chain transfer agent is a substance that acts during free radical vinyl polymerization to transfer a radical from a growing polymer chain to a non-radical molecule. The molecule that receives the radical may be the chain transfer agent itself.

As used herein, a tackifier is an organic compound having molecular weight of 500 to 50,000 and having glass transition temperature of -10°C or higher.

A Pressure Sensitive Adhesive (PSA) is an adhesive that forms a bond with a substrate when pressure is applied to bring the adhesive and the substrate into contact. The bond forms without addition of further materials or the application of heat. As used herein, a pressure sensitive adhesive article is an article in which a pressure sensitive adhesive is adhered to a first substrate and in which a surface of the PSA (the "available surface") is available to make contact with a second substrate. The available surface of the PSA may or may not be in contact with a release material. A release material is a material that forms a weak bond with the PSA and may be easily removed so that the available surface is exposed.

A composition is herein considered to be "aqueous" if the composition contains water in the amount of 25% or more by weight based on the weight of the composition.

Particles are said herein to be dispersed in a liquid medium if the particles are distributed throughout the liquid medium; dispersed particles may form an emulsion, a latex, a dispersion, a slurry, or some other composition in which particles are dispersed in a liquid medium. A liquid medium is considered herein to be an aqueous medium if water forms 50% or more by weight of the liquid medium (disregarding the weight of the dispersed particles).

When it is stated herein that an aqueous composition is dried, it is meant that the composition is either allowed to dry under ambient conditions or is dried by the application of heat, exposure to moving gas (which may or may not be heated), or a combination thereof.

Ratios presented herein are characterized as follows. For example, if a ratio is said to be 3:1 or greater, that ratio may be 3:1 or 5:1 or 100:1 but may not be 2:1. This characterization may be stated in general terms as follows. When a ratio is said herein to be X:1 or greater, it is meant that the ratio is Y:1, where Y is greater than or equal to X. For another example, if a ratio is said to be 15:1 or less, that ratio may be 15:1 or 10:1 or 0.1:1 but may not be 20:1. In general terms, when a ratio is said herein to be W:1 or less, it is meant that the ratio is Z :1, where Z is less than or equal to W.

The present invention involves the use of a substrate, herein labeled substrate (Sa). The substrate (Sa) may be any material. Preferred are paper, polymer film, and metal foil. Among polymer films, preferred are polyester films. Among polymer films, preferred are those in which at least one side has been treated by corona discharge.

In contact with substrate (Sa) is a layer of a composition, herein referred to as composition (Cb). Composition (Cb) contains one or more polymer, herein referred to as polymer (POLb). Polymer (POLb) has Tg of 20°C or lower; preferably 10°C or lower. Preferably polymer (POLb) has Tg of -100°C or higher.

Preferably, composition (Cb) has little or no tackifier. That is, the amount of tackifier in composition (Cb) is, by weight based on the dry weight of composition (Cb), less than 10%; more preferably 3% or less; more preferably 1% or less; more preferably zero.

Preferably, polymer (POLb) is an acrylic polymer. Preferably, the amount of polymerized units of acrylic monomers in polymer (POLb) is, by weight based on the weight of polymer (POLb), 50% or more; more preferably 70% or more; more preferably 90% or more; more preferably 99% or more. Preferably, polymer (POLb) has Mw of 10,000 or higher; more preferably 50,000 or higher.

Preferably, polymer (POLb) contains polymerized units of one or more of n-butyl acrylate (n-BA), ethyl acrylate (EA), isooctyl acrylate (i-OA), or a mixture thereof. As used herein, "isooctyl" is an unsubstituted alkyl group that contains exactly 8 carbon atoms in a branched configuration. The term "isooctyl" includes all branched isomers of 8-carbon alkyl groups and all mixtures of such isomers, including, for example, the 2-ethylhexyl group, dimethyl-hexyl groups, methyl-heptyl groups, trimethyl-pentyl, and mixtures thereof. Preferably, the sum of the amounts of polymerized units of n-BA, polymerized units of EA, and polymerized units of i-OA in polymer (POLb), by weight based on the weight of polymer (POLb), is 50% or more; more preferably 75% or more; more preferably 90% or more.

Preferably, every polymer in composition (Cb) that has Mw of 10,000 or higher is an acrylic polymer.

Preferably, the amount of polymer (POLb) in composition (Cb), by weight based on the dry weight of composition (Cb), is 80% or more; more preferably 90% or more; more preferably 95% or more.

Preferably, composition (Cb) has the properties of a PSA. Preferably, composition (Cb) has elastic modulus (G') of 20 kPa or higher over a temperature range that includes the range of 10°C to 40°C. Preferably, composition (Cb) has elastic modulus (G') over a temperature range that includes the range of 10°C to 40°C of 1,000 kPa or lower; more preferably 500 kPa or lower.

Preferably, composition (Cb) is in contact with a surface of substrate (Sa) that has been treated by corona discharge.

A layer (Lc) of composition (Cc) is in contact with the layer (Lb) of composition (Cb). Composition (Cc) contains one or more polymer (POLc1). The required and preferred characteristics of polymer (POLc1) are the same as those described above regarding polymer (POLb). Polymers (POLb) and (POLc1) may be the same as each other or may be different. Preferably, the amount of (POLc1) in composition (Cc), by weight based on the weight of composition (Cc), is 70% or more; more preferably 80% or more; more preferably 85% or more. Preferably, the amount of (POLc1) in composition (Cc), by weight based on the weight of composition (Cc), is 99.5% or less; more preferably 99% or less; more preferably 98% or less; more preferably 95% or less; more preferably 91% or less.

Composition (Cc) additionally contains acrylic polymer (POLc2). Acrylic polymer (POLc2) has number-average molecular weight (Mn) of 2,000 or higher. Acrylic polymer (POLc2) has Mn of 35,000 or lower. Acrylic polymer (POLc2) has Tg of -10°C or higher; more preferably 0°C or higher; more preferably 10°C or higher. Preferably the Tg of acrylic polymer (POLc2) is higher than the Tg of acrylic polymer (POLc1). Preferably the difference between the Tg of acrylic polymer (POLc2) and the Tg of acrylic polymer (POLc1) is 10°C or more; more preferably 20°C or more; more preferably 50°C or more.

Acrylic polymer (POLc2) contains polymerized units of one or more acrylic monomers herein labeled monomer (MON-A). Monomer (MON-A) is an unsubstituted alkyl ester of (meth)acrylic acid. The number of carbon atoms in the alkyl ester group in monomer (MON-A) is 1 or more; preferably 2 or more; more preferably 3 or more. The number of carbon atoms in the alkyl ester group in monomer (MON-A) is 20 or fewer; more preferably 10 or fewer; more preferably 8 or fewer. The amount of polymerized units of monomer (MON-A) in acrylic polymer (POLc2) is, by weight based on the weight of acrylic polymer (POLc2), 50% or more; more preferably 75% or more; more preferably 85% or more; more preferably 95% or more; more preferably 99% or more. The amount of polymerized units of monomer (MON-A) in acrylic polymer (POLc2) is, by weight based on the weight of acrylic polymer (POLc2), is 99.9% or less, preferably 99.8% or less; more preferably 99.6% or less.

Acrylic polymer (POLc2) optionally contains polymerized units of one or more acrylic monomers herein labeled monomer (MON-B). Monomer (MON-B) is selected from acrylic acid, methacrylic acid, and mixtures thereof. When present, the amount of polymerized units of monomer (MON-B) in acrylic polymer (POLc2) is, by weight based on the weight of acrylic polymer (POLc2), 0.1% or more; more preferably 0.2% or more; more preferably 0.4% or more. The amount of polymerized units of monomer (MON-A) in acrylic polymer (POLc2) is, by weight based on the weight of acrylic polymer (POLc2), is 50% or less; more preferably 25% or less; more preferably 15% or less; more preferably 5% or less; more preferably 1% or less.

Acrylic polymer (POLc2) optionally contains polymerized units of one or more acrylic monomers herein labeled monomer (MON-C). Monomer (MON-C) is any vinyl monomer, except that monomer (MON-C) is different from both of monomer (MON-A) and (MON-B). The amount of polymerized units of monomer (MON-A) in acrylic polymer (POLc2) is, by weight based on the weight of acrylic polymer (POLc2), is 50% or less; more preferably 10% or less; more preferably 2% or less. The amount of polymerized units of monomer (MON-A) in acrylic polymer (POLc2) may be zero.

Acrylic polymer (POLc2) may be made by any method. In a preferred method, the polymerization to form acrylic polymer (POLc2) is performed in the presence of one or more chain transfer agent. Preferably, the amount of chain transfer agent, by weight based on the total weight of monomers used in the formation of acrylic polymer (POLc2), is 1% or more; more preferably 2% or more; more preferably 4% or more. Preferably, the amount of chain transfer agent, by weight based on the total weight of monomers used in the formation of acrylic polymer (POLc2), is 10% or less; more preferably 8% or less; more preferably 6% or less. Preferred chain transfer agents have one or more attached -SH group. Preferred chain transfer agents also have a linear chain of n adjacent carbon atoms, where n is 2 or more; more preferably 4 or more; more preferably 6 or more.

Preferably, the amount of acrylic polymer (POLc2) in composition (Cc), by weight based on the weight of composition (Cc), is 30% or less; more preferably 20% or less; more preferably 15% or less. Preferably, the amount of acrylic polymer (POLc2) in composition (Cc), by weight based on the weight of composition (Cc), is 0.5% or more; more preferably 1% or more; more preferably 2% or more; more preferably 5% or more; more preferably 9% or more.

Preferably, composition (Cc) has the properties of a PSA. Preferably, composition (Cc) has elastic modulus (G') over a temperature range that includes the range of 10°C to 40°C of 5 kPa or higher; more preferably 10 kPa or higher; more preferably 20 kPa or higher. Preferably, composition (Cc) has elastic modulus (G') over a temperature range that includes the range of 10°C to 40°C of 1,000 kPa or lower; more preferably 500 kPa or lower.

Composition (Cc) contains little or no tackifier that is not an acrylic polymer. That is, the amount of tackifier that is not an acrylic polymer in composition (Cc) is, by weight based on the dry weight of composition (Cc), 1% or less; more preferably zero.

It is useful to consider the quantity (SUMc), defined herein as the sum of the weight of polymer (POLc1) and the weight of polymer (POLc2). Preferably, the ratio of quantity (SUMc) to the total weight of composition (Cc) is 0.6:1 or higher; more preferably 0.8:1 or higher; more preferably 0.9:1 or higher.

It is useful to characterize the total thickness (TOT), which is the sum of the thickness of layer (Lb) plus the thickness of layer (Lc). Preferably, the total thickness (TOT) is 1 micrometer or more; more preferably 2 micrometer or more; more preferably 5 micrometer or more. Preferably, the total thickness (TOT) is 50 micrometer or less; more preferably 40 micrometer or less.

The layers (Lb) and (Lc) may be characterized by coat weight, which is the weight of dry material per unit area. Preferably, the ratio of the coat weight of layer (Lb) to the coat weight of layer (Lc) is 0.1:1 or higher; more preferably 0.25:1 or higher; more preferably 0.67:1 or higher. Preferably, the ratio of the coat weight of layer (Lb) to the coat weight of layer (Lc) is 9:1 or lower; more preferably 4:1 or lower; more preferably 1.5:1 or lower.

In some embodiments, the pressure sensitive article of the present invention has a release liner in contact with layer (Lc). A release liner has a surface of low energy density such as, for example, a silicone coating, to which a PSA does not normally adhere well. When present, the release liner protects layer (Lc) of the pressure sensitive article of the present invention until it is desired to use the pressure sensitive article of the present invention by adhering it to a substrate of interest (i.e., substrate (Sd)). The release liner can be easily removed from the pressure sensitive article of the present invention, which can then be brought into contact with substrate (Sd).

The pressure sensitive article of the present invention may be made by any method. In a preferred method, each of the layers (Lb) and (Lc) is constructed by forming a layer of an aqueous composition and then drying that layer of aqueous composition.

Preferably, layer (Lb) is formed by first providing an aqueous composition (AQb), which contains dispersed particles of acrylic polymer (POLb). Aqueous composition (AQb) may contain additional compounds in addition to water and acrylic polymer (POLb). A preferred method of making aqueous composition (AQb) is to perform aqueous emulsion polymerization to form dispersed particles of aqueous polymer (POLb) in the form of a polymer latex, which can then serve as aqueous composition (AQb). Preferably, the dispersed polymer particles in aqueous composition (AQb) have volume-average diameter of 50 to 750 nanometers. Preferably, the amount of acrylic polymer (POLb) present in aqueous composition (AQb) is, by weight based on the total weight of aqueous composition (AQb), 20% to 55%.

Similarly, a preferred method of making layer (Lc) is to provide an appropriate aqueous composition (AQc), which is applied to layer (Lb) and then dried. Preferably aqueous composition (AQc) contains dispersed polymer particles. In some embodiments, the dispersed polymer particles contain both acrylic polymer (POLc1) and acrylic polymer (POLc2). In preferred embodiments, aqueous composition (AQc) contains dispersed particles of acrylic polymer (POLc1) and also contains separate dispersed particles of acrylic polymer (POLc2).

Aqueous dispersion (AQc) may be made by any method. In a preferred method, aqueous emulsion polymerization is performed to produce a latex (herein labeled (AQc1)) of particles of acrylic polymer (POLc1) dispersed in an aqueous medium. The necessary and preferred characteristics of aqueous composition (AQc1) are the same as those described above for aqueous composition (AQb). In some embodiments, a separate aqueous composition (herein labeled (AQc2)) is provided that contains particles of polymer (POLc2) dispersed in an aqueous medium, and aqueous compositions (AQc1) and (AQc2) are mixed together to form aqueous composition (AQc). In preferred embodiments ("in situ" embodiments), acrylic polymer (POLc2) is formed by aqueous emulsion polymerization of one or more monomers in (AQc1). In in situ embodiments, the polymer (POLc2) that is formed may be formed on the particles of polymer (POLc1). In preferred in situ embodiments, particles of polymer (POLc2) are formed that are separate from the particles of polymer (POLc1). In in situ embodiments, one or more optional additional ingredient may be added to the result of forming polymer (POLc2) in the presence of polymer (POLc1), and the result is used as aqueous composition (AQc).

The pressure sensitive article of the present invention may be made by any method. Preferably, the article is made by a method that comprises the following steps:
(A) forming a layer of an aqueous composition (Qb) that contains dispersed particles of the acrylic polymer (POLb) on a first surface,
(B) forming a layer of an aqueous composition (Qc) that contains dispersed particles that contain (i) the acrylic polymer (POLc1) and (ii) the acrylic polymer (POLc2) on a second surface,
(C) drying the layer of the aqueous composition (Qb) to form the layer (Lb), and
(D) drying the layer of the aqueous composition (Qc) to form the layer (Lc).

In some embodiments, steps (A) and (B) are both performed, and then steps (C) and (D) are performed simultaneously. In such embodiments, a layer (Lb1) of aqueous composition (Cb1) is applied to substrate (Sa) (the first surface) and, while the layer (Lb1) of aqueous composition (Cb1) is still wet, a layer (Lc1) of aqueous composition (Cc1) is applied on top of the layer (Lb1) of aqueous composition (Cb1) (the second surface), and then the entire ensemble is then dried. Among such embodiments, it is preferred that steps (A) and (B) are performed simultaneously. That is, a multilayer coating device is used that simultaneously applies a layer (Lb1) of aqueous composition (Cb1) to substrate (Sa) and also applies a layer (Lc1) of aqueous composition (Cc1) onto the layer (Lb1) of aqueous composition (Cb1), and then the entire ensemble is dried. One suitable coating device is a slide coater. A slide coater forms a liquid composite in which there is a layer (Lb1) of aqueous composition (Cb1) underneath a layer (Lc1) of aqueous composition (Ca); while keeping those layers intact, the slide coater applies a layer of the entire composite onto a substrate (Sa) in a way that brings layer (Lb1) into contact with substrate (Sa) and leaves layer (Lc1) in contact with air; then the entire article is dried to remove water from the aqueous compositions.

Also contemplated are embodiments in which the pressure sensitive article is made by a transfer coating method, for example a method that involves making a coating layer of composition (Cc) on a release liner (the second surface), then making a coating layer of composition (Cb) on top of the layer of composition (Cb) (the first surface), then contacting the layer of composition (Cb) with substrate (Sa) (preferably under pressure), and then removing the release liner. In such embodiments, step (B) is performed prior to step (A).

It is contemplated that the pressure sensitive adhesive article of the present invention will be put to use by bringing it into contact with an additional substrate (Sd), the target substrate. It is contemplated that pressure will be applied to bring composition (Cc) and substrate (Sd) into intimate contact and then released. It is contemplated that the result will be a bonded article in which the pressure sensitive adhesive article is still intact and in which composition (Cc) is bonded with substrate (Sd). Substrate (Sd) may be any substance. Preferably, Substrate (Sd) is a polyolefin.

The present invention is not limited to any specific mechanism. It is contemplated that tack arises from the interaction between layer (Lc) of the pressure sensitive adhesive article of the present invention and the surface of substrate (Sd) (i.e., the target substrate). It is contemplated that the pressure sensitive article of the present invention will have acceptable tack because the acrylic polymer (POLc2) is contemplated to function as a tackifier in layer (Lc), which is in contact with substrate (Sd). It is contemplated that the acrylic polymer (POLc2) will resist migration from layer (Lc) to layer (Lb), thereby maintaining a high concentration of acrylic polymer (POLc2) in layer (Lc) (which will be in contact with substrate (Sd)), and thus maintaining the ability to exert a relatively high tack adhesion to substrate (Sd).

In contrast to the present invention, it is contemplated that a comparative pressure sensitive article could be made, similar to the pressure sensitive article of the present invention except that in the comparative article, acrylic polymer (POLc2) is replaced by a previously-known tackifier that is not an acrylic polymer, such as, for example, a rosin ester. It is expected that the rosin ester would migrate freely from the top layer (analogous to layer (Lc)) to the other layer(s) (analogous to layer (Lb)). Thus the full improvement in tack performance that might be expected would not be obtained, because the migration would cause the concentration of rosin ester in the top layer to be reduced.

The following are examples of the present invention. Operations were performed at room temperature (approximately 23°C) except where otherwise stated.

### Preparative Example 1 (PE1).

The procedure for making acrylic polymer that qualifies as acrylic polymer (POLc2) was as follows. A 3-liter, 4-necked round bottom flask was charged with 610 grams water and ammonium persulfate (APS) at the level of 1.5 wt% based on monomer. A monomer emulsion feed composed of 280 grams water, 100 grams anionic sulfated surfactant, 1000 grams monomer and n-dodecylmercaptan (n-DDM) (5 wt% based on monomer) was then added uniformly to the flask over 3 hours while maintaining 84°C polymerization temperature. Simultaneously with the monomer emulsion feed, APS was added at the level of 0.5 wt% based on monomer in 45 grams water. Following the monomer addition the batch was held at 84°C for 30 minutes, then cooled to 70°C, and 1 gram of 28% aqueous ammonia was added. The batch was further cooled to room temperature and then filtered, and the polymeric product was recovered.

The monomer composition was 99.5% n-butyl methacrylate and 0.5% methacrylic acid by weight.

Pressure sensitive adhesive compositions were made as follows. All samples were lightly formulated with a wetting agent, such as 0.3% - 0.5% (by weight, wet/wet) SURFYNOL^{(™)} 440 wetting agent obtained from Air Products ("440") and 0.3% - 0.5% Aerosol OT-75 from Solvay (by weight, wet/wet), based on total emulsion, to improve wet-out for lab drawdowns unless otherwise specified. The viscosity was then adjusted to approximately 1000 mPa*s (1000 cps) (Brookfield, RVDV, 30 rpm, 63#) using a thickener from the ACRYSOL^{™} family from The Dow Chemical Company, Midland, Michigan.

Lab Drawdowns to form multilayer articles as shown in Fig. 1 were made as follows. Layer (Lb) **(2)** was coated onto a first silicone-coated paper or film release liner and then dried at 80°C for 5 minutes at wet coating thickness between 2 and 50 micrometers. Separately, layer (Lc) **(3)** was coated onto a second release liner, also dried at 80°C for 5 minutes at wet coating thickness between 2 and 50 micrometers. The untackified layer (i.e., layer (Lb)) was then transferred onto a corona treated polypropylene ("PP") film (60 micrometer in thickness), by laminating the PP film (Substrate (Sa) **(1))** and adhesive coated first release liner. The first release liner was then removed to expose the untackified adhesive layer (Lb). This layer (Lb) was then brought into contact with layer (Lc) (currently coated onto the second release liner) to form a laminate. Then the second release liner was removed, and the result was the multi-layer construction shown in Fig. 1.

Loop Tack (PSTC Test Method 16) (Pressure Sensitive Tape Council, One Parkview Plaza, Suite 800, Oakbrook Terrace, IL 60101, USA) was performed as follows. The Loop Tack test measures the initial adhesion when the adhesive comes in contact with the substrate (Sd) **(4).** Testing was conducted after the adhesive laminate was conditioned in a controlled environment (22.2 to 23.3°C (72 - 74 °F), 50% relative humidity) for at least 1 day. A strip 2.54 cm (1 inch) wide was cut and folded over to form a loop, exposing the adhesive side. It was then placed in between the jaws of the INSTRON^{(™)} tensile tester, and the lower jaw was lowered at a rate of 30.48 cm/min (12 in/min) to the substrate such that a square area of the adhesive of 2.54 cm by 2.54 cm (1 inch x 1 inch) comes in contact with the substrate (Sd) **(4)** for 1 second. Then the adhesive was pulled away and the peak force to pull the adhesive away from the substrate was recorded. The substrate (Sd) **(4)** was low density polyethylene.

The pressure sensitive adhesive articles were also analyzed using secondary ion mass spectrometry (SIMS) analysis with gas cluster ion beam etching in a depth profiling mode, which reveals the relative concentration of specific functional groups and molecular fragments as a function of depth. For samples containing rosin ester, the functional group studied was the rosin acid functional group, and for samples containing acrylic polymer PE1, the functional group studied was butyl alcohol.

The materials used in these examples were as follows:

| Label | Name | Manufacturer | Description |
|---|---|---|---|
| AC1 | Invisu^{™} 3100 | Dow Chemical Co | Acrylic Polymer⁽¹⁾ |
| AC2 | Robond^{™} PS-7860 | Dow Chemical Company | Acrylic Polymer⁽¹⁾ |
| AC3 | Robond^{™} PS-7874 | Dow Chemical Company | Acrylic Polymer⁽¹⁾ |
| RE1 | Snowtack^{™} SE 782G | Lawter Co. | rosin ester⁽²⁾ |

| | | | |
|---|---|---|---|
| (1) qualifies as either (POLb) or (POLc1) (2) rosin ester is a tackifier and is not an acrylic polymer | | | |

The loop tack test results were as follows. "Tack" is the peak force as described above, reported in Newtons (N). "Ex" means "Example." Example numbers ending in "C" are comparative. "Comp" means "composition." "Coat-Wt" means "coat weight" reported in grams of dry coating per square meter (gsm). "Tackifier" means either rosin ester tackifier (in comparative examples) or acrylic polymer (POLc2) in the working example. "%Tackifier" is the weight percent of tackifier, based on the total dry weight of the tackified layer.

| | Example: | | | |
|---|---|---|---|---|
| | 1 | 2C | 3C | 4C |
| | | | | |
| Lb: comp | AC1 | none | AC2 | none |
| Lb: Coat-Wt (gsm) | 20 | 0 | 20 | 0 |
| | | | | |
| Lc: POLc1 comp | AC1 | AC1 | AC3 | AC3 |
| Lc: tackifier comp | PE1 | PE1 | RE1 | RE1 |
| Lc: %Tackifier | 20 | 20 | 20 | 20 |
| Lc: Coat-Wt (gsm) | 20 | 20 | 20 | 20 |
| | | | | |
| Tack (N) | 5.4 | 5.8 | 6.9 | 9.0 |

The failure mode in all tack tests was adhesive failure (i.e., clean separation between the test substrate (Sd) and the layer of the pressure sensitive article that was in contact with substrate (Sd).

SIMS result on Example 3C: The concentration of RE1 was uniform throughout the entire depth. That is, the concentration of RE1 was constant as a function of depth throughout layers (Lc) and (Lb). It is emphasized that even though, when the layers were made, RE1 was present only in layer (Lc) and not in layer (Lb), when the sample was analyzed, the RE1 had diffused uniformly throughout layers (Lb) and (Lc).

SIMS result on Example 1: layer (Lc) showed a relatively high concentration of PE1, with only a slight decrease in concentration as the location approached the interface with layer (Lb). In layer (Lb), there was a steeper decrease in concentration of PE1, as the location moved from the interface between layers (Lc) and (Lb) and moved toward the substrate (Sa). In sum, there was significantly higher concentration of PE1 in layer (Lc) than in layer (Lb). It is expected that confining PE1 to layer (Lc) will promote good tack resistance in the pressure sensitive article of the present invention.

The SIMS results are consistent with the tack results. When comparing the comparative example 4C to comparative 3C, it is clear that when the tackifier is free to migrate throughout both layers (as shown by the SIMS data), the reduction in tackifier concentration in the top layer causes a relatively large loss of tack performance: a drop from 9 Newtons to 6.9 Newtons (23% drop in tack force). In contrast, when comparing comparative example 2C with Example 1, it is clear that, when migration of the tackifier is significantly inhibited, the drop in tack performance is also small: a drop from 5.8 Newtons to 5.4 Newtons (only 7% drop in tack force). That is, when the tackifier does not migrate out of the top layer, the ability of the pressure sensitive article to exert a relatively high tack adhesion is maintained.

## Claims

1. A pressure sensitive adhesive article comprising
(a) a substrate (Sa)
(b) in contact with the substrate (Sa), a layer (Lb) of a pressure sensitive composition (Cb) that comprises one or more acrylic polymer (POLb) having Tg of 20°C or lower as determined by differential scanning calorimetry using the method as defined in the description, and
(c) in contact with the layer (Lb), a layer (Lc) of a composition (Cc) that comprises, by weight based on the weight of the layer (Lc),
(i) 60% to 99.5% one or more acrylic polymer (POLc1) having Tg of 20°C or lower as determined by differential scanning calorimetry using the method as defined in the description, and
(ii) 0.5% to 40% one or more acrylic polymer (POLc2) having number-average molecular weight of 2,000 or higher, having number-average molecular weight of 35,000 or less as measured by size exclusion chromatography, having Tg of -10°C or higher as determined by differential scanning calorimetry using the method as defined in the description, and comprising polymerized units, by weight based on the weight of (POLc2),
(A) 50% to 99.9% of one or more unsubstituted alkyl ester of (meth)acrylic acid, wherein the alkyl group has 1 to 20 carbon atoms,
(B) 0% to 50% of acrylic acid, methacrylic acid, or a mixture thereof,
(C) and 0% to 50% one or more additional vinyl monomer,
wherein composition (Cc) comprises 1% or less by weight based on the dry weight of composition (Cc) of a tackifier that is not an acrylic polymer.

2. The pressure sensitive article of claim 1 wherein the acrylic polymer (POLc2) was made by a process that comprises aqueous emulsion polymerization of one or more monomers in the presence of chain transfer agent in the amount of 1% to 10% by weight based on the total weight of monomers.

3. The pressure sensitive article of claim 1 wherein the acrylic polymer (POLc2) comprises, by weight based on the weight of acrylic polymer (POLc2), 80% to 99.9% polymerized units of one or more unsubstituted alkyl esters of (meth)acrylic acid, and 0% to 20% polymerized units of (meth)acrylic acid.

4. A method of making the pressure sensitive article of claim 1, wherein the method comprises
(A) forming a layer of an aqueous composition (Qb) that contains dispersed particles of the acrylic polymer (POLb) on a first surface,
(B) forming a layer of an aqueous composition (Qc) that contains dispersed particles that contain (i) the acrylic polymer (POLc1) and (ii) the acrylic polymer (POLc2) on a second surface,
(C) drying the layer of the aqueous composition (Qb) to form the layer (Lb), and
(D) drying the layer of the aqueous composition (Qc) to form the layer (Lc).

5. The method of claim 4, wherein aqueous composition (Qb) has been made by a process comprising aqueous emulsion polymerization of one or more monomers to produce dispersed particles of the acrylic polymer (POLb).

6. A bonded article made by a process of contacting a substrate (Sd) with the article of claim 1, wherein the substrate (Sd) is in contact with the layer (Lc).

7. The bonded article of claim 6, wherein the substrate (Sd) is a polyolefin.

## Patentansprüche

1. Haftklebstoffartikel, umfassend
(a) ein Substrat (Sa)
(b) in Kontakt mit dem Substrat (Sa), eine Schicht (Lb) einer Haftzusammensetzung (Cb), die ein oder mehrere Acrylpolymere (POLb) umfasst, die eine Tg von 20 °C oder geringer aufweist, wie durch Differenzkalorimetrie unter Verwendung des in der Beschreibung definierten Verfahren bestimmt, und
(c) in Kontakt mit der Schicht (Lb), eine Schicht (Lc) einer Zusammensetzung (Cc), die, bezogen auf das Gewicht der Schicht (Lc), umfasst,
(i) zu 60 Gew-% bis 99,5 Gew-% ein oder mehrere Acrylpolymere (POLc1), die eine Tg von 20 °C oder geringer aufweisen, wie durch Differenzkalorimetrie unter Verwendung des in der Beschreibung definierten Verfahren bestimmt, und
(ii) zu 0,5 Gew-% bis 40 Gew-% ein oder mehrere Acrylpolymere (POLc2), die ein zahlenmittleres Molekulargewicht von 2.000 oder höher aufweisen, die ein zahlenmittleres Molekulargewicht von 35.000 oder weniger aufweisen, wie durch Größenausschlusschromatographie gemessen, die eine Tg von -10 °C oder höher aufweisen, wie durch Differenzkalorimetrie unter Verwendung des in der Beschreibung definierten Verfahren bestimmt, und umfassend polymerisierte Einheiten, bezogen auf das Gewicht von (POLc2),
(A) zu 50 Gew-% bis 99,9 Gew-% ein oder mehrere unsubstituierte Alkylester von (Meth)acrylsäure, wobei die Alkylgruppe 1 bis 20 Kohlenstoffatome aufweist,
(B) zu 0 Gew-% bis 50 Gew-% Acrylsäure, Methacrylsäure oder eine Mischung davon,
(C) und zu 0 Gew-% bis 50 Gew-% ein oder mehrere zusätzliche Vinylmonomere,
wobei die Zusammensetzung (Cc) zu 1 Gew.-% oder weniger, bezogen auf das Trockengewicht der Zusammensetzung (Cc), einen Klebrigmacher umfasst, der kein Acrylpolymer ist.

2. Haftartikel nach Anspruch 1, wobei das Acrylpolymer (POLc2) durch einen Prozess hergestellt wurde, das eine wässrige Emulsionspolymerisation eines oder mehrerer Monomere in der Gegenwart eines Kettenübertragungsmittels in einer Menge von 1 Gew.-% bis 10 Gew.-% umfasst, bezogen auf das Gesamtgewicht der Monomere.

3. Haftartikel nach Anspruch 1, wobei das Acrylpolymer (POLc2), bezogen auf das Gewicht des Acrylpolymers (POLc2), zu 80 Gew.-% bis 99,9 Gew.-% polymerisierte Einheiten eines oder mehrerer unsubstituierter Alkylester von (Meth)acrylsäure und zu 0 Gew.-% bis 20 Gew.-% polymerisierte Einheiten von (Meth)acrylsäure umfasst.

4. Verfahren zum Herstellen des Haftartikels nach Anspruch 1, wobei das Verfahren umfasst
(A) Ausbilden einer Schicht aus einer wässrigen Zusammensetzung (Qb), die dispergierte Partikel des Acrylpolymers (POLb) enthält, auf einer ersten Oberfläche,
(B) Ausbilden einer Schicht aus einer wässrigen Zusammensetzung (Qc), die dispergierte Partikel enthält, die (i) das Acrylpolymer (POLc1) und (ii) das Acrylpolymer (POLc2) enthalten, auf einer zweiten Oberfläche,
(C) Trocknen der Schicht aus der wässrigen Zusammensetzung (Qb), um die Schicht (Lb) auszubilden, und
(D) Trocknen der Schicht aus der wässrigen Zusammensetzung (Qc), um die Schicht (Lc) auszubilden.

5. Verfahren nach Anspruch 4, wobei die wässrige Zusammensetzung (Qb) durch einen Prozess hergestellt wurde, umfassend die wässrige Emulsionspolymerisation eines oder mehrerer Monomere, um dispergierte Partikel des Acrylpolymers (POLb) zu produzieren.

6. Verbundartikel, hergestellt durch einen Prozess eines Kontaktierens eines Substrats (Sd) mit dem Artikel nach Anspruch 1, wobei das Substrat (Sd) mit der Schicht (Lc) in Kontakt steht.

7. Verbundartikel nach Anspruch 6, wobei das Substrat (Sd) ein Polyolefin ist.

## Revendications

1. Article adhésif sensible à la pression comprenant
(a) un substrat (Sa)
(b) en contact avec le substrat (Sa), une couche (Lb) d'une composition sensible à la pression (Cb) qui comprend un ou plusieurs polymères acryliques (POLb) ayant une Tg de 20 °C ou moins, telle que déterminée par calorimétrie différentielle à balayage à l'aide de la méthode telle que définie dans la description, et
(c) en contact avec la couche (Lb), une couche (Lc) d'une composition (Cc) qui comprend, en poids sur la base du poids de la couche (Lc),
(i) 60 % à 99,5 % d'un ou plusieurs polymères acryliques (POLc1) ayant une Tg de 20 °C ou moins, telle que déterminée par calorimétrie différentielle à balayage à l'aide de la méthode telle que définie dans la description, et
(ii) 0,5 % à 40 % d'un ou plusieurs polymères acryliques (POLc2) ayant une masse moléculaire moyenne en nombre de 2 000 ou plus, ayant une masse moléculaire moyenne en nombre de 35 000 ou moins, telle que mesurée par chromatographie d'exclusion stérique, ayant une Tg de -10 °C ou plus telle que déterminée par calorimétrie différentielle à balayage à l'aide de la méthode telle que définie dans la description, et comprenant des motifs polymérisés, en poids par rapport au poids de (POLc2),
(A) 50 % à 99,9 % d'un ou plusieurs esters d'alkyle non substitués d'acide (méth)acrylique, dans lequel le groupe alkyle a de 1 à 20 atomes de carbone,
(B) 0 % à 50 % d'acide acrylique, d'acide méthacrylique, ou d'un mélange de ceux-ci,
(C) et 0 % à 50 % d'un ou plusieurs monomères vinyliques supplémentaires,
dans lequel la composition (Cc) comprend 1 % ou moins en poids, sur la base du poids sec de la composition (Cc), d'un agent poisseux qui n'est pas un polymère acrylique.

2. Article sensible à la pression selon la revendication 1, dans lequel le polymère acrylique (POLc2) a été préparé par un processus qui comprend une polymérisation en émulsion aqueuse d'un ou plusieurs monomères en présence d'un agent de transfert de chaîne dans la quantité de 1 % à 10 % en poids sur la base du poids total de monomères.

3. Article sensible à la pression selon la revendication 1, dans lequel le polymère acrylique (POLc2) comprend, en poids sur la base du poids du polymère acrylique (POLc2), 80 % à 99,9 % de motifs polymérisés d'un ou plusieurs esters d'alkyle non substitués d'acide (méth)acrylique, et 0 % à 20 % de motifs polymérisés d'acide (méth)acrylique.

4. Procédé de préparation de l'article sensible à la pression selon la revendication 1, dans lequel le procédé comprend
(A) la formation d'une couche d'une composition aqueuse (Qb) qui contient des particules dispersées du polymère acrylique (POLb) sur une première surface,
(B) la formation d'une couche d'une composition aqueuse (Qc) qui contient des particules dispersées contenant (i) le polymère acrylique (POLc1) et (ii) le polymère acrylique (POLc2) sur une seconde surface,
(C) le séchage de la couche de la composition aqueuse (Qb) afin de former la couche (Lb), et
(D) le séchage de la couche de la composition aqueuse (Qc) afin de former la couche (Lc).

5. Procédé selon la revendication 4, dans lequel la composition aqueuse (Qb) a été préparée par un processus comprenant une polymérisation en émulsion aqueuse d'un ou plusieurs monomères afin de produire des particules dispersées du polymère acrylique (POLb).

6. Article collé préparé par un processus consistant à mettre en contact un substrat (Sd) avec l'article selon la revendication 1, dans lequel le substrat (Sd) est en contact avec la couche (Lc).

7. Article collé selon la revendication 6, dans lequel le substrat (Sd) est une polyoléfine.
